# EUROPÄISCHE PATENTSCHRIFT

(11) **EP 2 792 284 B1**
(45) Veröffentlichungstag und Bekanntmachung des Hinweises auf die Patenterteilung: **01.08.2018**
(21) Anmeldenummer: 14163800.7
(22) Anmeldetag: 08.04.2014
(51) Int. Cl.: A47J 31/60

(54) **Entkalkungsvorrichtung und Getränkeautomat mit einer Entkalkungsvorrichtung**
Descaling device and beverage machine with a descaling system
Dispositif de détartrage et automate à boissons doté d'un dispositif de détartrage

(30) Priorität: 17.04.2013 DE 102013103854
(43) Veröffentlichungstag der Anmeldung: 22.10.2014
(73) Patentinhaber: Miele & Cie. KG, 33332 Gütersloh (DE)
(72) Erfinder: Tembaak, Jutta, 49492 Westerkappeln (DE); Linke, Patrick, 33611 Bielefeld (DE)

(56) Entgegenhaltungen:
- WO-A1-2009/124786
- DE-A1-102006 023 449
- DE-A1-102011 081 010
- DE-A1-102011 082 429
- DE-A1-102011 111 177
- DE-U1-202007 001 114

## Beschreibung

Wasser weist regional sehr unterschiedliche chemische Zusammensetzungen auf. Dabei stellen insbesondere Calciumcarbonat und dessen chemische Verbindungen ein besonderes Problem dar, weil sich dieser gemeinhin als "Kalk" bezeichnete Stoff in Wasser führenden Leitungen und Aggregaten absetzt und diese über einen längeren Zeitraum betrachtet, entweder außer Betrieb setzt oder eine ungehinderte Fluidströmung zumindest in entscheidendem Maße behindert. Je nach Kalkgehalt des Wassers wird dieses in verschiedene Härtegrade unterteilt. So unterscheidet man eher weiches Wasser, das einen geringen Kalkanteil aufweist, von hartem Wasser, mit einem hohen Kalkgehalt. Diese Härtegrade des Wassers bestimmen beispielsweise auch die benötigte Waschmittelmenge beim Waschen von Wäsche oder die Häufigkeit, mit der Wasser verarbeitende oder Wasser führende Leitungen oder Armaturen entkalkt werden müssen. Bekannt und bereits im Einsatz sind hierfür Entkalkungsmittel, die auf Grund einer chemischen Reaktion in der Lage sind, den Kalk zu lösen. Dieser Vorgang muss in Abhängigkeit von der bereits erwähnten Wasserhärte mehr oder weniger regelmäßig durchgeführt werden. Das Problem der Entkalkung stellt sich allerdings nicht nur bei Wasser, sondern generell bei Fluiden, also auch bei gasförmigen Stoffen auf Wasserbasis. Somit können Dampf führende Leitungen ebenso betroffen sein, wie Flüssigkeitsleitungen.

Aus der EP 2 265 158 B1 geht eine Entkalkungsvorrichtung zur Entkalkung eines Strömungsleitungssystems für Fluide am Beispiel eines Getränkeautomaten hervor, bei dem ein über einen Wassereinlass mit Wasser beaufschlagbarer Vorratsbehälter vorhanden ist, in dem sich ein wasserlösliches Entkalkungsmittel befindet. Ein Gemischauslass des Vorratsbehälters sorgt dafür, dass das gelöste Entkalkungsmittel in das Strömungsleitungssystem abgeführt wird und dort seine gewünschte Wirkung erzielt. Hierbei wird das Prinzip der Durchlaufströmung genutzt. Dies bedeutet, das Wasser durchläuft vom Wassereinlass zum Gemischauslass die eingebrachte Dosis Entkalkungsmittel, löst dieses und wird als Entkalkungsgemisch am Gemischauslass in das Strömungsleitungssystem abgeführt. Nachteilig ist bei der genannten Lösung allerdings, dass der Anwender vor dem Entkalkungsvorgang zunächst je eine vorgeschriebene Dosis Entkalkungsmittel sowie Wasser in den Vorratsbehälter einfüllen muss, um erst anschließend die Entkalkung durchführen zu können. Die vom Anwender einzubringende Menge Entkalkungsmittel erfordert von diesem nicht nur eine hohe Sorgfalt, sondern auch die genaue Kenntnis des zuvor erwähnten Härtegrades des Wassers. Wird hierbei nicht die notwendige Menge Entkalkungsmittel eingebracht, so kann dies entweder zu einer Überdimensionierung oder zu einer zu geringen Konzentration des Entkalkungsmittels in dem entstehenden Entkalkungsgemisch führen. Die Folgen sind jedoch gravierend, da die Wirkung bei einer zu geringen Konzentration des Entkalkungsmittels nicht in erforderlichem Maße einsetzt. Somit besteht der Bedarf, das Entkalkungsmittel sehr genau dosierbar einzusetzen und dabei den Aufwand für den Anwender möglichst gering zu halten.

Aus der DE 10 2011 081 010 A1 ist ein Getränkebereiter mit einer Entkalkungsvorrichtung bekannt, die einen als Kartusche ausgebildeten Vorratsbehälter für Entkalkungsmittel aufweist. Der Behälter und die Aufnahme am Gerät sind dabei derart aufeinander abgestimmt, dass sich der Behälterverschluss beim Einsetzen des Behälters in die Aufnahme selbständig öffnet. Insgesamt ist die hier vorgeschlagene Lösung sehr aufwändig, da in der Kartusche eine Dosierpumpe integriert ist, die mit einem geräteseitigen Antriebsmotor gekoppelt ist.

Ein weiteres Problem bei Wasser führenden Strömungsleitungssystemen besteht in der Gefahr einer Verkeimung. Eine Keimbildung ist insbesondere zu beobachten, wenn die Flüssigkeit über eine gewisse Zeit in dem Strömungsleitungssystem steht und/oder wenn ein warmes Umfeld existiert, das die Keimentwicklung zusätzlich begünstigt. Wird ein derartiges Strömungsleitungssystem nicht regelmäßig hinreichend gereinigt und nicht ebenso regelmäßig von Ablagerungen, wie dem zuvor beschriebenen Kalk, befreit, fördert dies auch eine Verkeimung, was jedoch insbesondere bei Getränkeautomaten problematisch ist. Diese Überlegungen haben dazu geführt, dass dem Entkalkungsmittel ein Entkeimungsmittel beigemischt wird, so dass nachfolgend der Begriff "Entkalkungsmittel" synonym sowohl für ein reines Entkalkungsmittel, als auch für ein mit Entkeimungsmittel versehenes Entkalkungsmittel zu verstehen ist. Ein derartiges Entkeimungsmittel kann beispielsweise Sorbinsäure sein. Weitere Stand der Technik Dokumente auf diesem Gebiet sind: DE 10 2011 082 429, DE 10 2011 111 177, WO 2009 124 786, DE 20 2007 001 114, DE 10 2006 023 449. Der Erfindung stellt sich das Problem, eine Entkalkungsvorrichtung bereitzustellen, die einen einfachen Aufbau aufweist und eine sehr exakte Dosierung des Entkalkungsmittels und dessen Abgabe in das Strömungsleitungssystem ermöglicht. Darüber hinaus ist es Aufgabe der Erfindung, einen Getränkeautomaten mit einer derartigen Entkalkungsvorrichtung auszustatten. Erfindungsgemäß wird dieses Problem durch eine Entkalkungsvorrichtung mit den Merkmalen des unabhängigen Patentanspruchs 1 und 2 sowie durch einen Getränkeautomaten mit den Merkmalen des Patentanspruches 16 gelöst.

Vorteilhafte Ausgestaltungen und Weiterbildungen der Erfindung ergeben sich aus den sich jeweils anschließenden Unteransprüchen.

Eine Entkalkungsvorrichtung, aufweisend einen Vorratsbehälter mit einem darin aufgenommenen Entkalkungsmittel zur Entkalkung eines Strömungsleitungssystems, wurde erfindungsgemäß dahingehend weitergebildet, dass der Vorratsbehälter eine Dosiereinheit zur maßgenauen Abgabe des Entkalkungsmittels in das Strömungsleitungssystem aufweist.

Mit der Dosiereinheit gelingt es in vorteilhafter Weise das Entkalkungsmittel dem Strömungsleitungssystem in exakt dosierter Form zuzuführen. Diese sehr genaue Dosierbarkeit hat den Vorzug, dass die benötigte Menge gelösten Entkalkungsmittels, die dem Strömungsleitungssystems für Fluide zugeführt wird, optimal dem Härtegrad des lokal gegebenen Wassers angepasst werden kann. Auf diese Weise ist ein besonders sparsamer Umgang mit den vorhandenen Ressourcen möglich, was beispielsweise auch einen wesentlichen Beitrag zum Umweltschutz mit sich bringt.

Ein weiterer, nennenswerter Vorteil der Erfindung besteht darin, dass eine aufwendige Dosierung des Entkalkungsmittels, wie sie beispielsweise mittels einer Dosierpumpe bei bereits bekannten Lösungen erfolgt, entfällt. Damit werden verschiedene Zubehörteile nicht mehr benötigt und es wird insgesamt wertvoller Bauraum gespart, sodass sich der Aufbau einer derartigen Entkalkungsvorrichtung insgesamt vereinfacht und damit auch die Kosten entscheidend gesenkt werden können. Auch die für jeden Entkalkungsvorgang separate Befüllung mit Wasser und Entkalkungsmittel kann mit der Erfindung entfallen, sodass insgesamt eine sehr anwenderfreundliche, einfache Lösung bereitgestellt wird.

Hinsichtlich des Entkalkungsmittels ist festzuhalten, dass dieses einen flüssigen, einen zähflüssigen oder pulverförmigen Zustand beziehungsweise eine aus Pulver gepresste Tablettenform aufweisen kann.

Eine erste Ausgestaltung der Erfindung besteht darin, dass der Vorratsbehälter als Einwegartikel ausgeführt ist.

Die Ausführung des Vorratsbehälters als Einwegartikel erspart dem Anwender ein aufwändiges Befüllen eines einmal entleerten Vorratsbehälters. Zudem bringt diese Lösung den Vorteil mit sich, dass Reparaturen oder Reinigungsmaßnahmen am Vorratsbehälter vollständig entfallen können und dessen Lebensdauer nicht auf die Lebensdauer des mit dem Vorratsbehälter ausgestatteten Gerätes ausgelegt sein muss. Damit vereinfacht sich auch die konstruktive Ausführung des Vorratsbehälters.

Wird darüber hinaus die Dosiereinheit als ein einteiliger Bestandteil des Vorratsbehälters ausgeführt, so kann der Vorratsbehälter zusammen mit der Dosiereinheit hergestellt und in die Entkalkungsvorrichtung eingesetzt werden. Folglich ist hierbei nur noch ein einzelner Montagevorgang erforderlich. Die Dosiereinheit muss vom Anwender nicht erst aufwändig mit dem Vorratsbehälter verbunden werden, sondern steht diesem bereits komplett zur Verfügung. Auch diese Maßnahme führt folglich zu einer wesentlichen Vereinfachung der erfindungsgemäßen Lösung und darüber hinaus zu einer leichteren Handhabung.

Entsprechend einem weiterführenden Vorschlag nach der Erfindung wird davon ausgegangen, dass der Vorratsbehälter in eine zu dem Vorratsbehälter korrespondierende Aufnahme eingesetzt wird. Unter einer "korrespondierenden Aufnahme" ist dabei eine Aufnahme zu verstehen, die eine zum Vorratsbehälter passende Geometrie aufweist. Bei entsprechender Gestaltung von Aufnahme und Vorratsbehälter kann auf diese Weise auch sichergestellt werden, dass der Vorratsbehälter nur in einer einzig möglichen, korrekten Einbaulage in die Entkalkungsvorrichtung eingesetzt werden kann. Die Aufnahme dient zudem der Fixierung des Vorratsbehälters in der Entkalkungsvorrichtung.

Wie bereits ausgeführt wurde, ist es von besonderem Vorteil, wenn der Vorratsbehälter als Einwegartikel ausgeführt ist. Da hierfür ein Transport und der Einbau des Vorratsbehälters notwendig sind, muss der Vorratsbehälter bei Nichtgebrauch zuverlässig verschlossen sein. Dies ist auch erforderlich, weil es sich bei dem Entkalkungsmittel in der Regel um Säuren oder säurehaltige Stoffe handelt und ansonsten die Gefahr von Verletzungen der mit dem Vorratsbehälter agierenden Personen bestehen würde. Aus diesem Grund wird vorgeschlagen, dass die Dosiereinheit oder der Vorratsbehälter einen durch das Einsetzen des Vorratsbehälters in die Aufnahme öffnenden Verschluss aufweist. Diese Lösung besteht folglich darin, dass der Verschluss während des Einsetzens des Vorratsbehälters in seine korrespondierende Aufnahme der Entkalkungsvorrichtung geöffnet wird, ohne, dass es hierzu gesonderter Handlungen bedarf.

Als Verschluss kann hierbei eine Membran dienen beziehungsweise kann der Verschluss eine derartige Membran aufweisen. Membrane haben den Vorteil, dass die sehr leicht zu durchstechen sind und dennoch bei Nichtgebrauch des Vorratsbehälters, also im nicht eingebauten Zustand, eine bestmögliche Abdichtung gewährleisten. Als Membran kann zum Beispiel eine Abdichtung aus einem Gummiwerkstoff dienen.

Zur Umsetzung des Öffnungsvorganges des Verschlusses ist entsprechend einer weiteren Ausgestaltung der Erfindung vorgesehen, dass an der Dosiereinheit oder an dem Vorratsbehälter eine Öffnungsmechanik zum Öffnen des Verschlusses angeordnet ist. Diese Öffnungsmechanik ist dabei geeignet, den Verschluss zu zerstören beziehungsweise zu öffnen, wenn der Vorratsbehälter in die Aufnahme der Entkalkungsvorrichtung eingesetzt wird.

Einem konkreten Ausführungsbeispiel der Erfindung folgend kann die Öffnungsmechanik dabei einen Stellhebel oder einen Schieber aufweisen, wobei der Stellhebel oder Schieber zwischen einer Schließstellung bei ungeöffnetem Verschluss und einer Offenstellung bei geöffnetem Verschluss bewegbar gelagert ist. Mit dem Einsetzen des Vorratsbehälters in die Aufnahme wird folglich die Bewegung der Öffnungsmechanik realisiert und dementsprechend der Verschluss geöffnet. Auch diese Maßnahme trägt wesentlich zur Vereinfachung der gesamten Entkalkungsvorrichtung bei, weil der Anwender keine zusätzlichen Handlungen als das Einsetzen des Vorratsbehälters vornehmen muss. Es ergibt sich jedoch hieraus ein weiterer Vorteil. Dieser ist insbesondere darin zu sehen, dass der Anwender nicht versehentlich vergessen kann, den Verschluss vor Einsetzen des Vorratsbehälters in die Aufnahme zu öffnen.

Eine konkrete Lösung, wie die Öffnungsmechanik ausgeführt sein kann, ergibt sich aus einer Weiterbildung dieser Ausführung. Hiernach ist der Stellhebel beziehungsweise der Schieber durch ein Widerlager in der Aufnahme des Vorratsbehälters zwischen der Schließstellung und der Offenstellung bewegbar ausgeführt. Das Widerlager hat dabei die Aufgabe, den Stellhebel oder den Schieber beim Einsetzen des Vorratsbehälters in die Aufnahme aus dem verschlossenen Zustand des Vorratsbehälters oder der Dosiereinheit in einem geöffneten zu überführen.

Eine sehr einfache Variante eines derartigen Widerlagers besteht darin, dass dieses als eine widerhakenartig ausgebildete Rampe ausgebildet ist. Beim Einsetzen des Vorratsbehälters in seine Aufnahme wird dabei der Stellhebel oder der Schieber entlang der Rampe bewegt und durch einen geringen zusätzlichen Kraftaufwand aus seiner ursprünglichen Position in die Offenstellung bewegt.

Der für das Einsetzen des Vorratsbehälters erforderliche Kraftaufwand kann zudem reduziert werden, wenn die Rampe gegen die Kraft wenigstens einer Feder bewegbar gelagert ist. Somit ist die Rampe in der Lage, dem Stellhebel oder den Schieber geringfügig auszuweichen. Diese Lagerungsart hat jedoch einen weiteren Vorzug. Durch die Feder wird die Rampe nach dem Einsetzen des Vorratsbehälters in die Aufnahme in ihre ursprüngliche Position zurück bewegt. Soll nun der entleerte Vorratsbehälter aus der Entkalkungsvorrichtung entnommen werden, bildet die Rampe einen Widerstand, der ausreicht, den Stellhebel oder den Schieber irreversibel auszulenken oder zu zerstören.

Der erwähnte Widerstand der Rampe führt auch unmittelbar zu einem weiteren Vorschlag der Erfindung. Hiernach weist der Stellhebel oder der Schieber eine Sollbruchstelle auf, deren Zerstörung durch die Entnahme des Vorratsbehälters aus der Aufnahme irreversibel ist. Die Rampe hat folglich in Zusammenwirkung mit der Sollbruchstelle die Aufgabe, den Stellhebel oder den Schieber bei der Entnahme des Vorratsbehälters unbrauchbar zu machen. Dadurch kann ohne großen Aufwand erreicht werden, dass nicht versehentlich ein bereits entleerter Vorratsbehälter in die Entkalkungsvorrichtung eingebracht wird. Somit wurde eine Möglichkeit geschaffen, auf einfache Weise sicherzustellen, dass der Vorratsbehälter stets mit Entkalkungsmittel befüllt ist und somit die erforderliche Entkalkung des Strömungsleitungssystems durchgeführt werden kann.

Die Öffnungsmechanik kann jedoch auch ein nach dem Prinzip "push to open" funktionierender Mechanismus sein. Dementsprechend geht eine besonders vorteilhafte Ausgestaltung der Erfindung dahin, dass die Entkalkungsvorrichtung wenigstens einen beim Einsetzen des Vorratsbehälters in die Aufnahme in eine korrespondierende Ausnehmung einrückenden Stift aufweist, der bei vollständig eingesetztem Vorratsbehälter an einem plastisch verformbaren oder zerstörbaren, den Vorratsbehälter in der eingesetzten Position fixierenden Kontaktelement zur Anlage gebracht ist. Das Kontaktelement kann dabei unter anderem auch der Erkennung der korrekten Einbaulage des Vorratsbehälters dienen.

Das Kontaktelement bildet in einer vorteilhaften Ausführungsvariante gleichzeitig den Boden der ansonsten durchgängig ausgeführten Ausnehmung und ist bevorzugt unmittelbar am Vorratsbehälter angeordnet beziehungsweise einteilig daran angeformt.

Analog der bereits zuvor beschriebenen Öffnungsmechanik erfolgt bei diesem Mechanismus eine irreversible, plastische Verformung oder die Zerstörung des Kontaktelementes, wenn der entleerte Vorratsbehälter aus der Entkalkungsvorrichtung entnommen wird. Diese Fixierung des Vorratsbehälters kann hierbei durch eine durch Einwirkung einer Kraft erzeugte Bewegung des Vorratsbehälters in Einsatzrichtung und eine dadurch bewirkte irreversible Zerstörung einer Sollbruchstelle am Kontaktelement umgesetzt werden. Die Ausführung ist im Vergleich zu der zuvor beschriebenen Öffnungsmechanik noch einfacher aufgebaut.

Um dem Anwender einer erfindungsgemäßen Entkalkungsvorrichtung die Möglichkeit zu geben, ohne großen Aufwand zu erfassen, ob ein Vorratsbehälter in die Entkalkungsvorrichtung eingesetzt ist oder nicht, geht ein weiterführender Lösungsvorschlag dahin, dass die Entkalkungsvorrichtung mindestens einen Sensor zur Detektierung des eingesetzten Vorratsbehälters aufweist. Das Signal des Sensors kann dabei in mehrfacher Hinsicht genutzt werden. So ist einerseits eine Anzeigeeinrichtung ansteuerbar, die die zuvor genannte Information vermittelt. Darüber hinaus kann auch der Betrieb der Entkalkungsvorrichtung unterbrochen werden, wenn durch das Sensorsignal ein fehlender Vorratsbehälter detektiert wird.

Der Sensor kann im einfachsten Fall ein Mikroschalter sein.

Besonders vorteilhaft wird es darüber hinaus angesehen, wenn der Vorratsbehälter insgesamt aus Kunststoff oder aus einem Kunststoff-Verbundmaterial hergestellt ist. Diese Werkstoffe sind flüssigkeitsdicht und weisen ein sehr geringes Eigengewicht auf. Ferner ist die Herstellung des Vorratsbehälters aus Kunststoff kostengünstig und einfach umsetzbar. Es können beliebige Geometrien erstellt werden, ohne dass es aufwändiger Nacharbeiten bedarf. Natürlich ist es denkbar, den Vorratsbehälter als einteiliges Kunststoff-Formteil herzustellen.

Ein Getränkeautomat weist in an sich bekannter Weise ein Strömungsleitungssystem für Fluide mit mindestens einem Wasser enthaltenden Wasserbehälter oder Wasseranschluss, wenigstens einer Pumpe, mindestens einem Ventil und wenigstens einer Entnahmeeinrichtung auf. Unter einer "Entnahmeeinrichtung" ist im Sinne der Erfindung beispielsweise bei einem als Kaffeeautomat ausgeführten Getränkeautomaten eine Dampfdüse, eine Ausgabestelle für Heißwasser oder zum Beispiel die Kaffeeausgabedüse zu verstehen. Ebenso kann es sich hier bei anderen Getränkeautomaten ganz allgemein um die Zapfstelle des Getränks handeln. Die Pumpe dient dabei der Förderung der Flüssigkeiten und/oder Gase innerhalb des Strömungsleitungssystems. Als Quelle für das Frischwasser, welches für die Bereitung des Getränkes und/oder der Durchführung der Entkalkung dient, kann in einfacher Weise ein Wasserbehälter zum Einsatz kommen. Andere Lösungen weisen einen festen Wasseranschluss auf, was hier explizit nicht ausgeschlossen wird und nachfolgend synonym zu verstehen ist.

Bei einem Getränkeautomaten nach der Erfindung wird vorgeschlagen, dass das von der Dosiereinheit abgegebene Entkalkungsmittel dem Strömungsleitungssystem über eine Mischkammer zuführbar ist.

Mit einer derartigen Mischkammer kann ein Entkalkungsmittel sehr hoher Konzentration verwendet werden, weil die Erzeugung des Entkalkungsgemisches erst in der Mischkammer erfolgt. Dies ist deshalb von Vorteil, weil der Vorratsbehälter länger verwendet werden kann, als herkömmliche Ausführungen. Der für die Pflege des Getränkeautomaten erforderliche Aufwand reduziert sich auf diese Weise. Zudem lässt sich in Verbindung mit der Dosiereinheit über die Mischkammer eine zusätzliche Verbesserung der Genauigkeit der Konzentration des Entkalkungsmittels erreichen. Diese hohe Genauigkeit ist von Vorteil, weil in Abhängigkeit vom Härtegrad des verwendeten Wassers auch die Konzentration des Entkalkungsmittels sehr exakt eingestellt werden muss, um optimale Entkalkungsergebnisse zu erreichen. Bei Verwendung der eingangs genannten Säure können bei hartem Wasser 30-40 mmol Säure je Liter Wasser erforderlich werden. Bei weichem Wasser sind durchaus 20 mmol je Liter Wasser ausreichend, sodass einfach weniger Entkalkungsmittel in das Fluid gegeben wird. Aus dieser relativ breiten Spanne ist erkennbar, wie wesentlich die Dosiereinheit und die Abgabe in eine Mischkammer für einen derartigen Getränkeautomaten und dessen optimale Entkalkung ist.

Eine erste Ausgestaltung eines derartigen Getränkeautomaten nach der Erfindung geht dahin, dass die Entkalkungsvorrichtung zur Entkalkung des Strömungsleitungssystems zwischen Wasserbehälter und Entnahmeeinrichtung angeordnet ist.

Die Anordnung der Entkalkungsvorrichtung zwischen Wasserbehälter und Entnahmeeinrichtung hat dabei den Vorteil, dass das Strömungsleitungssystem nahezu vollständig entkalkt werden kann. Aus diesem Grund sollte das Entkalkungsmittel in Strömungsrichtung betrachtet möglichst nahe hinter dem Wasserbehälter in das Strömungsleitungssystem abgegeben werden. Allerdings ist bei der Getränkezubereitung unbedingt zu vermeiden, dass Entkalkungsmittel in das Strömungsleitungssystem eintritt. Daher wird bei dieser Lösung mindestens ein steuerbares Ventil zum Einsatz kommen, um den Entkalkungszweig des Strömungsleitungssystems von dem Teil der ausschließlich für die Getränkeaufbereitung dient, zu trennen. Mit anderen Worten wird durch das Ventil gesteuert, dass das Entkalkungsmittel nur dann in das Strömungsleitungssystem eintritt, wenn der Getränkeautomat außer Betrieb ist, das heißt, nicht für die Zubereitung von Getränken genutzt wird.

Neben der zuvor bereits beschriebenen Möglichkeit der Anordnung der Entkalkungsvorrichtung in einem erfindungsgemäßen Getränkeautomat wird alternativ hierzu vorgeschlagen, dass die Entkalkungsvorrichtung zur Entkalkung des Strömungsleitungssystems als Bypass in die Wasserleitung des Wasserbehälters integriert ist.

Die Bypass-Lösung hat den entscheidenden Vorteil, dass hiermit sehr einfach und zuverlässig vermieden werden kann, dass Rückstände des Entkalkungsmittels in den Kreislauf des Strömungsleitungssystems gelangen, wenn dieses zur Bereitung eines Getränkes genutzt wird.

Es versteht sich von selbst, dass nach einer erfolgten Entkalkung und/oder Reinigung des Strömungsleitungssystems abschließend stets eine gründliche Spülung mit frischem Wasser durchgeführt werden muss, um sämtliche Rückstände des Entkalkungsvorganges beziehungsweise des Reinigungsvorganges zu beseitigen!

Zur Umsetzung einer möglichst weitgehenden Automatisierung des Entkalkungsvorganges geht ein weiterführender Vorschlag nach der Erfindung ferner dahin, dass der Getränkeautomat eine Zeitsteuerung zur tournusmäßigen Durchführung einer Entkalkung in Abhängigkeit von der Benutzungshäufigkeit und/oder der Häufigkeit eines Getränkebezuges aufweist. Ebenso kann auch die Dosierung des zu lösenden Entkalkungsmittels automatisiert werden. Somit übernimmt der Getränkeautomat selbstständig die Überwachung einer erforderlichen Entkalkung. Der Anwender ist von regelmäßigen Kontrollen des Zustandes des Getränkeautomaten sowie von einer manuellen Durchführung der Entkalkung gänzlich entbunden. Dies gewährleistet eine lange Lebensdauer des Gerätes und seine einwandfreie Funktion.

Die Erfindung wird nachfolgend anhand der beigefügten Zeichnungen näher erläutert. Die gezeigten Ausführungsbeispiele stellen dabei keine Einschränkung auf die dargestellten Varianten dar, sondern dienen lediglich der Erläuterung eines Prinzips der Erfindung. Gleiche oder gleichartige Bauteile werden stets mit denselben Bezugsziffern bezeichnet. Um die erfindungsgemäße Funktionsweise veranschaulichen zu können, sind in den Figuren nur stark vereinfachte Prinzipdarstellungen gezeigt, bei denen auf die für die Erfindung nicht wesentlichen Bauteile verzichtet wurde. Dies bedeutet jedoch nicht, dass derartige Bauteile bei einer erfindungsgemäßen Lösung nicht vorhanden sind.

Es zeigt:
Figur 1: eine schematisch stark vereinfachte Darstellung eines Vorratsbehälters, vor dessen Einbau in die Entkalkungsvorrichtung,
Figur 2: eine schematisch stark vereinfachte Darstellung eines in die Entkalkungsvorrichtung eingesetzten Vorratsbehälters,
Figur 3: eine schematisch stark vereinfachte Darstellung eines aus der Entkalkungsvorrichtung entnommenen, leeren Vorratsbehälters,
Figur 4: schematisch stark vereinfacht eine weitere Ausführungsvariante einer Entkalkungsvorrichtung vordem Einsetzen des Vorratsbehälters,
Figur 5: einen vergrößerten Ausschnitt aus der Darstellung in Figur 4 bei korrekt eingesetztem Vorratsbehälter,
Figur 6: einen vergrößerten Ausschnitt aus der Darstellung in Figur 4 bei aus der Entkalkungsvorrichtung entnommenem Vorratsbehälter,
Figur 7: eine Frontansicht eines Getränkeautomaten mit einer Entkalkungsvorrichtung,
Figur 8: eine erste Variante eines Teils eines Flussbildes eines Strömungsleitungssystems in einem Getränkeautomaten in vereinfachter Darstellung und
Figur 9: eine zweite Variante eines Teils eines Flussbildes eines Strömungsleitungssystems in einem Getränkeautomaten in vereinfachter Darstellung.

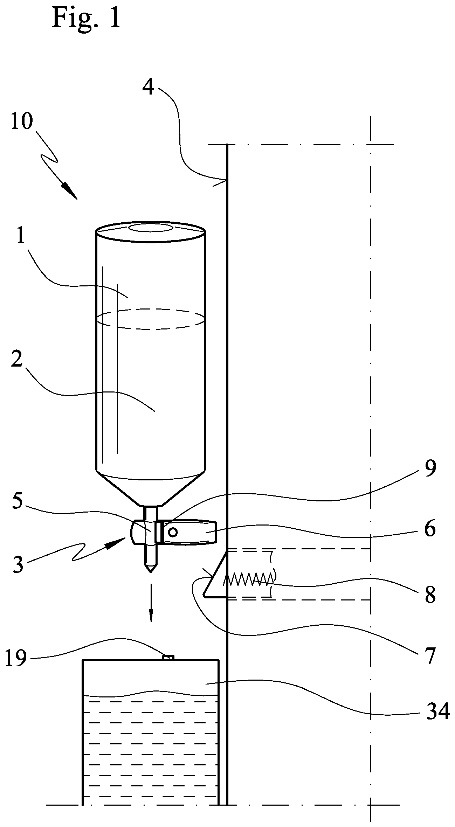

Die Darstellung in Figur 1 veranschaulicht eine schematisch stark vereinfachte Darstellung eines Vorratsbehälters 1, vor dessen Einbau in die Entkalkungsvorrichtung 10. Der Vorratsbehälter 1 kann in eine korrespondierende Aufnahme 4 der Entkalkungsvorrichtung 10 eingesetzt werden und ist hierbei in mit einem flüssigen Entkalkungsmittel 2 befüllt. Er weist an seinem unteren Ende eine Dosiereinheit 3 auf. Diese Dosiereinheit 3 funktioniert nach dem Infusionsprinzip und verfügt ferner über einen Verschluss 5, der bei nicht in die Entkalkungsvorrichtung 10 eingesetztem Vorratsbehälter 1 verschlossen ist. Zur Öffnung des Verschlusses 5 dient im vorliegenden Fall eine Öffnungsmechanik, die aus einem Stellhebel 6 besteht, der um eine nicht näher bezeichnete Achse schwenkbar an der Dosiereinheit 3 gelagert ist. Der Stellhebel 6 verfügt darüber hinaus über eine Sollbruchstelle 9, deren Funktion darin besteht, den Stellhebel 6 irreversibel zu zerstören, wenn der entleerte Vorratsbehälter 1 aus der Entkalkungsvorrichtung 10 entnommen wird. Diese Maßnahme hat Sicherheitsgründe und soll verhindern, dass ein entleerter Vorratsbehälter 1 erneut in die Entkalkungsvorrichtung 10 eingesetzt wird. Hierzu dient darüber hinaus ein Widerlager 7, das im vorliegenden Fall eine rampenförmige Kontur aufweist, wobei ein Höhenanstieg dieser Rampe 7 in Einschubrichtung des Vorratsbehälters 1 gegeben ist. Um dem Stellhebel 6 einen ausreichenden Widerstand entgegenzusetzen und dennoch zu verhindern, dass dieser an der Sollbruchstelle 9 abbricht, wenn der Vorratsbehälter 1 in die Entkalkungsvorrichtung 10 eingesetzt wird, ist das Widerlager 7 gegen die Kraft einer Feder 8 in der Entkalkungsvorrichtung 10 gelagert. Mit anderen Worten ist das Widerlager 7 begrenzt in der Lage, auszuweichen, setzt dem Stellhebel 6 jedoch einen ausreichenden Widerstand entgegen, damit dieser in eine Position verbracht wird, die eine Öffnung des Verschlusses 5 bewirkt. Unterhalb des Vorratsbehälters 1 befindet sich ferner eine Mischkammer 34, die Wasser enthält. Oberhalb der Mischkammer 34 ist zudem ein Sensor 19 in Form eines Mikroschalters angeordnet, der den korrekt eingesetztem Vorratsbehälter 1 detektiert.

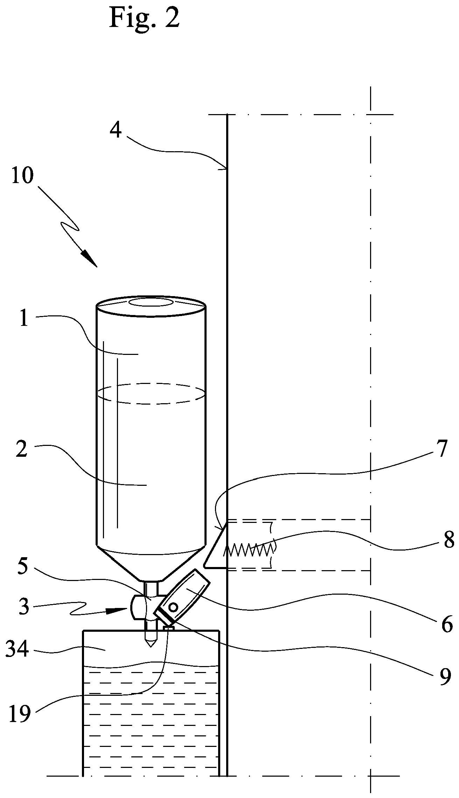

Die Einbaulage des Vorratsbehälters 1 in der Aufnahme 4 der Entkalkungsvorrichtung 10 ist in der Figur 2 gezeigt. Im Unterschied zu der Darstellung in Figur 1 taucht die Dosiereinheit 3 hierbei bereits unmittelbar in die Mischkammer 34 ein und der Verschluss 5 ist geöffnet. Die während des Einsetzens des Vorratsbehälters 1 in die Aufnahme 4 erfolgte Öffnung des Verschlusses 5 wurde hierbei durch das Entlanggleiten des Stellhebels 6 an der Schrägfläche des Widerlagers 7 erreicht. Dabei kann das Widerlager 7 geringfügig entgegen der Kraft der Feder 8 ausweichen, so dass die Sollbruchstelle 9 des Stellhebels 6 nicht zerstört wird. Der Gegendruck des Widerlagers 7 ist jedoch ausreichend, den Stellhebel 6 um seine Achse zu verschwenken und damit den Verschluss 5 zu öffnen. Diese spezielle Stellung des Stellhebels 6 wird bei der dargestellten Ausführungsvariante darüber hinaus dazu genutzt, einen als Mikroschalter ausgeführten Sensor 19 zu kontaktieren, so dass dieser ein Signal abgibt, welches den korrekten Einsatz des Vorratsbehälters 1 signalisiert. Das in dem Vorratsbehälter 1 enthaltende Entkalkungsmittel 2 kann auf diese Weise im Sinne einer Infusion in die Mischkammer 34 abgegeben werden, was vorliegend eine tröpfchenweise Abgabe ermöglicht und damit eine sehr genaue Einstellung der Konzentration des Entkalkungsmittels 2 zur Zuführung zum Strömungsleitungssystem gestattet. In diesem Fall wird folglich das Entkalkungsmittel 2 nicht unmittelbar an das Strömungsleitungssystem abgegeben, sondern mittelbar über die Mischkammer 34.

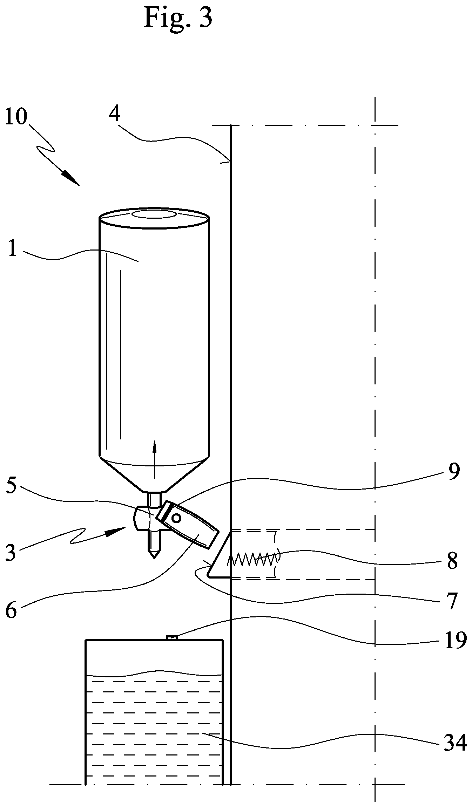

In der Figur 3 ist ein entleerter Vorratsbehälter 1 in einer bereits aus der Aufnahme 4 entnommenen Position dargestellt. Die Besonderheit besteht hierbei darin, dass die durch den Pfeil symbolisierte Bewegung des Vorratsbehälters 1 entgegen seiner Einschubrichtung dazu führt, dass der Stellhebel 6 an der Unterseite des Widerlagers 7 zur Anlage kommt und bei Fortsetzung der Entnahme an seiner Sollbruchstelle 9 abgebrochen oder stark überstreckt wird. Das Widerlager 7 ist aufgrund seiner Gestaltung als Rampe in dieser Bewegungsrichtung des Vorratsbehälters 1 nicht in der Lage, dem Stellhebel 6 auszuweichen. Somit kann die vorhandene Öffnungsmechanik auch zur irreversiblen Zerstörung des Vorratsbehälters 1 beziehungsweise der Dosiereinheit 3 genutzt werden, so dass ein entleerter Vorratsbehälter 1 nicht erneut in die Entkalkungsvorrichtung 10 eingesetzt werden kann.

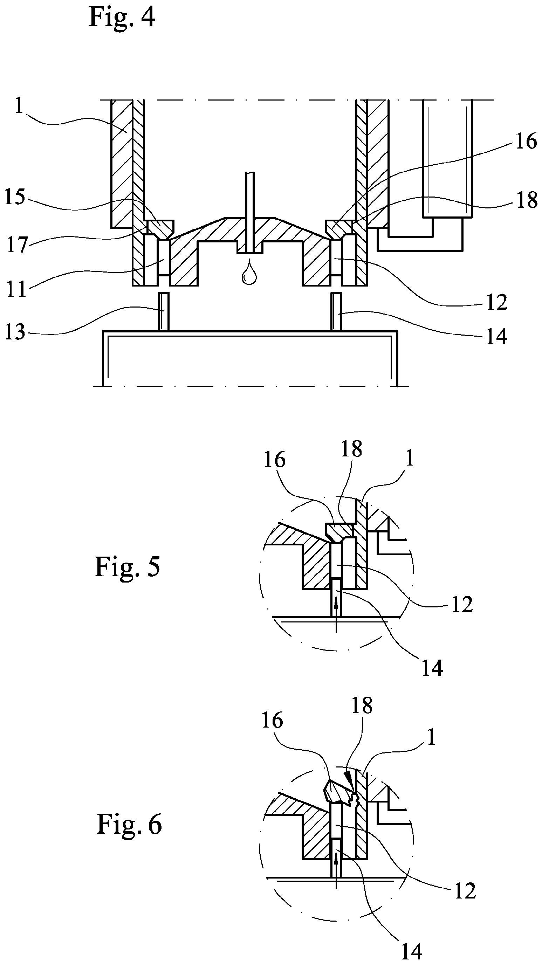

Die Figuren 4-6 veranschaulichen schematisch stark vereinfacht eine weitere Ausführungsvariante einer Entkalkungsvorrichtung 10, wobei die Figur 4 den Vorratsbehälter 1 vor dem Einsetzen in die Entkalkungsvorrichtung 10 zeigt. Hierbei weist der Vorratsbehälter 1 an seiner unteren, zur Abgabe des Entkalkungsmittels 2 geeigneten Seite mindestens zwei Ausnehmungen 11 und 12 auf. Diese Ausnehmungen 11,12 weisen eine komplementäre Geometrie zu korrespondierenden Stiften 13 und 14 auf. Oberhalb der Ausnehmungen 11,12 ist an der Innenseite des Vorratsbehälters 1 je ein Kontaktelement 15 beziehungsweise 16 ausgebildet, das die Ausnehmungen 11,12 in Richtung des Vorratsbehälters 1 verschließt. Jedes der Kontaktelemente 15,16 verfügt darüber hinaus über eine Sollbruchstelle 17 beziehungsweise 18.

Aus dem in Figur 5 ausschnittsweise dargestellten und vergrößerten Ausschnitt aus Figur 4 wird ersichtlich, dass während des Einsetzens des Vorratsbehälters 1 in die Entkalkungsvorrichtung 10 der Stift 14 in Richtung des Pfeils in die korrespondierende Ausnehmung 12 des Vorratsbehälters 1 eindringt und endseitig an dem Kontaktelement 16 zur Anlage kommt.

Wie aus der Figur 6 darüber hinaus zu entnehmen ist, dient das Kontaktelement 16 mit seiner daran vorhandenen Sollbruchstelle 18 dazu, ein erneutes Einsetzen eines bereits entleerten Vorratsbehälters 1 in die Entkalkungsvorrichtung zu vermeiden. Hierzu ist das Kontaktelement 16 geringfügig verformbar ausgeführt. Der korrekt eingesetzte Vorratsbehälter 1 weist einen geringfügigen Abstand zur Oberfläche der darunter angeordneten Mischkammer 34 auf. Dies ermöglicht zur Entnahme des Vorratsbehälters 1 aus der Entkalkungsvorrichtung 10 eine geringfügige Bewegung in Einschubrichtung des Vorratsbehälters 1. Diese Bewegung führt dazu, dass die Fixierung des Vorratsbehälters 1 in seiner Aufnahme 4 aufgehoben wird und das Kontaktelement 16 an seiner Sollbruchstelle 18 abbricht und somit ein erneutes Einsetzen eines bereits entleerten Vorratsbehälters 1 in die Entkalkungsvorrichtung 10 nicht mehr möglich ist.

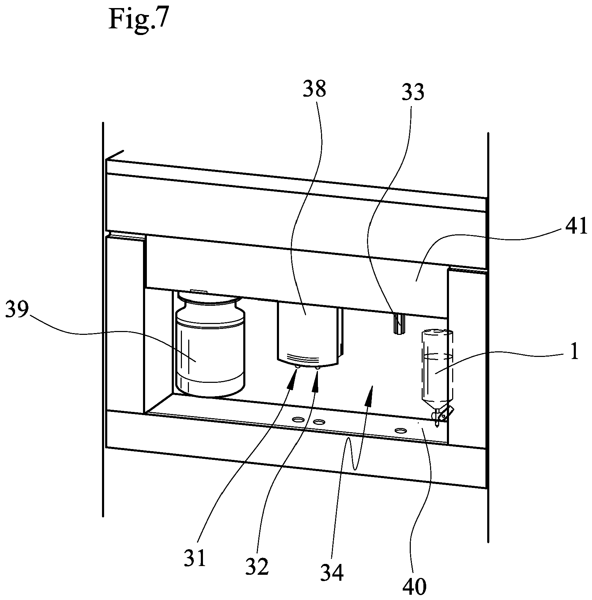

Die Figur 7 zeigt die Frontansicht eines eine Entkalkungsvorrichtung aufweisenden Getränkeautomaten am Beispiel eines in einen Küchenschrank eingesetzten und zur Zubereitung von Kaffeegetränken beziehungsweise Kaffeemischgetränken dienenden Kaffeeautomaten.

Die durch eine Blende 41 gebildete Front des Getränkeautomaten weist zunächst eine Vertiefung 37 auf, in der sich mehrere Entnahmeeinrichtungen 31-33 befinden. Eine in ihrer Höhe verstellbare Ausgabeeinheit 38 weist in ihrem unteren Bereich zwei Entnahmeeinrichtungen 31, 32 für die Abgabe von Kaffeegetränken auf. Die Entnahmeeinrichtung 33 stellt in diesem Fall eine Düse dar, die zur Abgabe von Wasserdampf verwendet wird. Seitlich neben den Entnahmeeinrichtungen 31-33 ist ein Flüssigkeitsbehälter 39 in die Vertiefung 37 eingehängt, aus dem beispielsweise Milch entnommen werden kann, um Kaffeemischgetränke herzustellen oder heiße Milch beziehungsweise Kakaogetränke zu erzeugen. Die untere Begrenzung der Vertiefung 37 wird durch eine Abtropfplatte 40 gebildet, die die von den Entnahmeeinrichtung 31-33 abtropfenden Reste in einen unterhalb der Abtropfplatte 40 vorhandenen Auffangbehälter abführt. Hierzu sind in die Abtropfplatte 40 mehrere Öffnungen eingebracht. Verdeckt durch die Blende 41 befindet sich im Geräteinneren ein durch gestrichelte Linien in der Figur 7 nur angedeuteter Vorratsbehälter 1 mit einem Entkalkungsmittel 2.

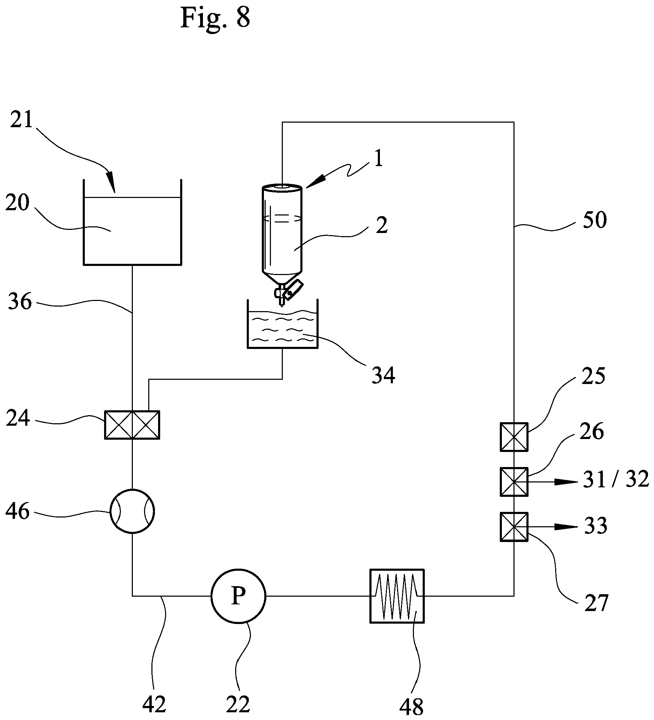

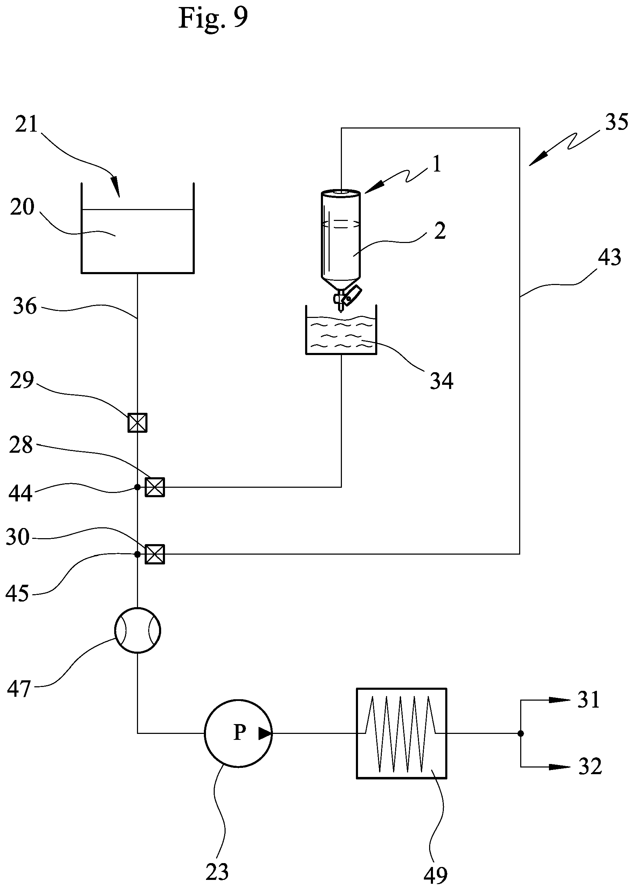

In den Figuren 8 und 9 sind zwei verschiedene Varianten eines Teils eines Flussbildes eines Strömungsleitungssystems in einem Getränkeautomaten in vereinfachter Darstellung gezeigt. Die Figur 8 veranschaulicht zunächst ein Flussbild, in dem die Entkalkungsvorrichtung 10 zur Entkalkung des Strömungsleitungssystems zwischen einem Wasserbehälter 21 und mehreren Entnahmeeinrichtungen 31, 32, 33 angeordnet ist. In dem Wasserbehälter 21 befindet sich frisches Wasser 20. Der Wasserbehälter 21 ist über eine Wasserleitung 36 an das Strömungsleitungssystems angeschlossen, wobei die Wasserleitung 36 in ein Mehrwegeventil 24 mündet, welches das Leitungssystem zur Aufbereitung der Getränke von dem Leitungssystem zur Entkalkung trennt.

In einer ersten Stellung lässt dieses Mehrwegeventil 24 frisches Wasser 20 unmittelbar in das Leitungssystem zur Aufbereitung der Getränke, während der Entkalkungsabschnitt des Strömungsleitungssystems verschlossen ist. Neben dem in dieser Richtung verschlossenen Mehrwegeventil 24 ist am Ende des Leitungssystems zur Entkalkung ein Absperrventil 25 vorhanden, das in dieser Schaltstellung des Mehrwegeventils 24 ebenfalls verschlossen ist. Die Ventile 26, 27 aufweisenden Entnahmeeinrichtungen 31-33 sind hingegen geöffnet und können genutzt werden, um ein Getränk zuzubereiten. Zur Unterstützung der Strömungsführung ist in das Leitungssystem zur Aufbereitung der Getränke ferner eine Pumpe 22 integriert, die das aus dem Wasserbehälter 21 entnommene Wasser 20 über eine Wasserleitung 42 zu einem Wärmetauscher beziehungsweise Thermoblock 48 zur Erwärmung des Wassers fördert. Darüber hinaus weist dieser Abschnitt des Strömungsleitungssystems ein Durchflussmessgerät 46 in Form eines Flowmeters auf.

Eine zweite Stellung des Mehrwegeventils 24 und des Absperrventils 25 führt dazu, dass frisches Wasser 20 aus dem Wasserbehälter 21 in das Leitungssystem zur Entkalkung und damit in die Wasserleitung 50 gelangt. Dadurch geht ein Teil des in dem Vorratsbehälter 1 enthaltenen Entkalkungsmittels 2 in Lösung über und wird über die Dosiereinheit 3 in die Mischkammer 34 abgegeben. Ist das korrekte Mischungsverhältnis zwischen Entkalkungsmittel 2 und frischem Wasser 20 erreicht, beginnt der Entkalkungsvorgang, so dass das Entkalkungsgemisch über das geöffnete Mehrwegeventil 24 zu den Ventilen 26 und 27 sowie zu den Entnahmeeinrichtungen 31-33 gelangt. Auf diese Weise werden auch diese Aggregate mit dem Entkalkungsmittel in Kontakt gebracht und entkalkt. Nachdem ein Lösungsaustritt an den Entnahmeeinrichtungen 31-33 zu verzeichnen ist, werden die Ventile 26 und 27 geschlossen, damit die Lösung des Entkalkungsmittels 2 seine Wirkung entfalten kann. Je nach Intensität der Nutzung und in Abhängigkeit vom Kalkgehalt des Wassers kann die Einwirkzeit eine Stunde oder länger betragen. In dieser Zeit ist ein Getränkebezug nicht möglich, weshalb der Getränkeautomat gesperrt ist und das Entkalkungsmittel 2 in den Strömungsleitungen verbleibt beziehungsweise zirkuliert. Während dieses Entkalkungsvorganges ist das Mehrwegeventil 24 in Richtung des Wassertankes 21 geschlossen, so dass kein Entkalkungsmittel in den Wassertank 21 beziehungsweise in das frische Wasser 20 gelangen kann. Im Anschluss an den Entkalkungsvorgang wird das gesamte Strömungsleitungssystem noch einmal mit frischem Wasser gespült, so dass es auch gereinigt ist.

Das in der Figur 9 gezeigte Flussbild weist ein zu der Darstellung in Figur 8 analoges Leitungssystem zur Aufbereitung der Getränke auf. Auch hierbei dient eine Pumpe 23 zur Förderung des frischen Wassers 20 aus dem Wasserbehälter 21 in das Leitungssystem. Ein Durchflussmessgerät in Form eines Flowmeters 47 sowie ein Wärmetauscher 49 machen insgesamt den identischen Aufbau dieses Teils des Strömungsleitungssystems aus. Zwei Entnahmeeinrichtungen 31, 32 dienen hierbei der Abgabe eines Kaffeegetränkes. Im Unterschied zu der Darstellung in Figur 8 wurde bei dieser Ausführungsvariante in die Wasserleitung 36 ein Bypass 35 integriert, der ausgehend von einem Abzweig 45 bis zu einem Abzweig 44 verläuft. Der Abzweig 44 weist ein Ventil 28 auf, während der Abzweig 45 mit einem weiteren Ventil 30 ausgstattet ist, so dass der Bypass 35 insgesamt von dem Wasser führenden Teil der Wasserleitung 36 getrennt beziehungsweise mit diesem Teil der Wasserleitung verbunden werden kann. In den Bypass 35 ist der Vorratsbehälter 1 integriert, der auf diese Weise bei geöffnetem Ventil 30 über die Wasserleitung 43 mit frischem Wasser 20 versorgt wird, so dass das darin enthaltene Entkalkungsmittel 4 in eine Lösung übergeht und über die Dosiereinheit 3 in die Mischkammer 34 abgeführt wird. Das ebenfalls geöffnete Ventil 28 ermöglicht die Einspeisung der Lösung des Entkalkungsmittels 2 über den Abzweig 44 in das Strömungsleitungssystem. Damit kann in der zuvor beschriebenen Weise der Entkalkungsvorgang eingeleitet werden. Ein Absperrventil 29 in der Wasserleitung 36 dient dazu, ein Eindringen der Lösung des Entkalkungsmittels 2 in den Wassertank 21 zu verhindern.

### BEZUGSZEICHENLISTE

- 1: Vorratsbehälter
- 2: Entkalkungsmittel
- 3: Dosiereinheit
- 4: Aufnahme
- 5: Verschluss
- 6: Stellhebel
- 7: Widerlager
- 8: Feder
- 9: Sollbruchstelle
- 10: Entkalkungsvorrichtung
- 11: Ausnehmung
- 12: Ausnehmung
- 13: Stift
- 14: Stift
- 15: Kontaktelement
- 16: Kontaktelement
- 17: Sollbruchstelle
- 18: Sollbruchstelle
- 19: Sensor
- 20: Wasser / Frischwasser
- 21: Wasserbehälter
- 22: Pumpe
- 23: Pumpe
- 24: Mehrwegeventil
- 25: Absperrventil
- 26: Ventil
- 27: Ventil
- 28: Ventil
- 29: Absperrventil
- 30: Ventil
- 31: Entnahmeeinrichtung
- 32: Entnahmeeinrichtung
- 33: Entnahmeeinrichtung
- 34: Mischkammer

### FORTSETZUNG BEZUGSZEICHENLISTE

- 35: Bypass
- 36: Wasserleitung
- 37: Vertiefung
- 38: Ausgabeeinheit
- 39: Flüssigkeitsbehälter
- 40: Abtropfplatte
- 41: Blende
- 42: Wasserleitung
- 43: Wasserleitung
- 44: Abzweig
- 45: Abzweig
- 46: Durchflussmessgerät (Flowmeter)
- 47: Durchflussmessgerät (Flowmeter)
- 48: Wärmetauscher (Thermoblock)
- 49: Wärmetauscher (Thermoblock)
- 50: Wasserleitung

## Patentansprüche

1. Entkalkungsvorrichtung, aufweisend einen Vorratsbehälter (1) mit einem darin aufgenommenen Entkalkungsmittel (2) zur Entkalkung eines Strömungsleitungssystems, wobei der Vorratsbehälter (1) eine Dosiereinheit (3) zur maßgenauen Abgabe des Entkalkungsmittels (2) in das Strömungsleitungssystem aufweist und der Vorratsbehälter (1) in eine zu dem Vorratsbehälter (1) korrespondierende Aufnahme (4) einsetzbar ist, wobei die Dosiereinheit (3) oder der Vorratsbehälter (1) einen durch das Einsetzen des Vorratsbehälters (1) in die Aufnahme (4) öffnenden Verschluss (5) aufweist,
**dadurch gekennzeichnet,**
**dass** der Verschluss (5) eine Membran ist oder aufweist.

2. Entkalkungsvorrichtung, aufweisend einen Vorratsbehälter (1) mit einem darin aufgenommenen Entkalkungsmittel (2) zur Entkalkung eines Strömungsleitungssystems, wobei der Vorratsbehälter (1) eine Dosiereinheit (3) zur maßgenauen Abgabe des Entkalkungsmittels (2) in das Strömungsleitungssystem aufweist und der Vorratsbehälter (1) in eine zu dem Vorratsbehälter (1) korrespondierende Aufnahme (4) einsetzbar ist, wobei die Dosiereinheit (3) oder der Vorratsbehälter (1) einen durch das Einsetzen des Vorratsbehälters (1) in die Aufnahme (4) öffnenden Verschluss (5) aufweist,
**dadurch gekennzeichnet,**
**dass** die Entkalkungsvorrichtung (10) wenigstens einen beim Einsetzen des Vorratsbehälters (1) in die Aufnahme (4) in eine korrespondierende Ausnehmung (11, 12) einrückenden Stift (13, 14) aufweist, der bei vollständig eingesetztem Vorratsbehälter (1) an einem plastisch verformbaren oder zerstörbaren, den Vorratsbehälter (1) in der eingesetzten Position fixierenden Kontaktelement (15, 16) zur Anlage gebracht ist.

3. Entkalkungsvorrichtung nach Anspruch 1 oder 2,
**dadurch gekennzeichnet, dass**
der Vorratsbehälter (1) als Einwegartikel ausgeführt ist.

4. Entkalkungsvorrichtung nach Anspruch 1, 2 oder 3,
**dadurch gekennzeichnet, dass**
die Dosiereinheit (3) einteiliger Bestandteil des Vorratsbehälters (1) ist.

5. Entkalkungsvorrichtung nach Anspruch 1,
**dadurch gekennzeichnet, dass**
an der Dosiereinheit (3) oder an dem Vorratsbehälter (1) eine Öffnungsmechanik zum Öffnen des Verschlusses (5) angeordnet ist.

6. Entkalkungsvorrichtung nach Anspruch 5,
**dadurch gekennzeichnet, dass**
die Öffnungsmechanik einen Stellhebel (6) oder einen Schieber aufweist, der zwischen einer Schließstellung bei ungeöffnetem Verschluss (5) und einer Offenstellung bei geöffnetem Verschluss (5) bewegbar gelagert ist.

7. Entkalkungsvorrichtung nach Anspruch 6,
**dadurch gekennzeichnet, dass**
der Stellhebel (6) beziehungsweise der Schieber durch ein Widerlager (7) in der Aufnahme (4) des Vorratsbehälters (1) zwischen der Schließstellung und der Offenstellung bewegbar ist.

8. Entkalkungsvorrichtung nach Anspruch 7,
**dadurch gekennzeichnet, dass**
das Widerlager (7) als eine widerhakenartig ausgebildete Rampe ausgebildet ist.

9. Entkalkungsvorrichtung nach Anspruch 8,
**dadurch gekennzeichnet, dass**
die Rampe gegen die Kraft wenigstens einer Feder (8) bewegbar gelagert ist.

10. Entkalkungsvorrichtung nach einem der Ansprüche 6 bis 9,
**dadurch gekennzeichnet, dass**
der Stellhebel (6) oder der Schieber eine Sollbruchstelle (9) aufweist, deren Zerstörung durch die Entnahme des Vorratsbehälters (1) aus der Aufnahme (4) irreversibel ist.

11. Entkalkungsvorrichtung nach Anspruch 2,
**dadurch gekennzeichnet, dass**
das Kontaktelement (15, 16) den Boden der ansonsten durchgängig ausgeführten Ausnehmung (11, 12) bildet.

12. Entkalkungsvorrichtung nach Anspruch 2 oder 11,
**dadurch gekennzeichnet, dass**
die Fixierung des Vorratsbehälters (1) durch eine durch Einwirkung einer Kraft erzeugte Bewegung des Vorratsbehälters (1) in Einsatzrichtung und eine dadurch bewirkte irreversible Zerstörung einer Sollbruchstelle (17, 18) am Kontaktelement (15, 16) ermöglicht ist.

13. Entkalkungsvorrichtung nach einem der Ansprüche 1 bis 12,
**dadurch gekennzeichnet, dass**
die Entkalkungsvorrichtung (10) mindestens einen Sensor (19) zur Detektierung des eingesetzten Vorratsbehälters (1) aufweist.

14. Entkalkungsvorrichtung nach Anspruch 13,
**dadurch gekennzeichnet, dass**
der Sensor (19) ein Mikroschalter ist.

15. Entkalkungsvorrichtung nach einem der vorstehend genannten Ansprüche,
**dadurch gekennzeichnet, dass**
der Vorratsbehälter (1) insgesamt aus Kunststoff oder aus einem Kunststoff-Verbundmaterial hergestellt ist.

16. Getränkeautomat mit einer Entkalkungsvorrichtung nach einem der vorstehend genannten Ansprüche, aufweisend ein Strömungsleitungssystem für Fluide mit mindestens einem Wasser (20) enthaltenden Wasserbehälter (21) oder Wasseranschluss, wenigstens einer Pumpe (22, 23), mindestens einem Ventil (24, 25, 26, 27, 28, 29, 30) und wenigstens einer Entnahmeeinrichtung (31, 32, 33), **dadurch gekennzeichnet, dass**
das von der Dosiereinheit (3) abgegebene Entkalkungsmittel (2) dem Strömungsleitungssystem über eine Mischkammer (34) zuführbar ist.

17. Getränkeautomat nach Anspruch 16,
**dadurch gekennzeichnet, dass**
die Entkalkungsvorrichtung zur Entkalkung des Strömungsleitungssystems zwischen Wasserbehälter (21) und Entnahmeeinrichtung (31, 32, 33) angeordnet ist.

18. Getränkeautomat nach Anspruch 16,
**dadurch gekennzeichnet, dass**
die Entkalkungsvorrichtung zur Entkalkung des Strömungsleitungssystems als Bypass (35) in die Wasserleitung (36) des Wasserbehälters (21) integriert ist.

19. Getränkeautomat nach einem der Ansprüche 16 bis 18,
**dadurch gekennzeichnet, dass**
der Getränkeautomat eine Zeitsteuerung zur tournusmäßigen Durchführung einer Entkalkung in Abhängigkeit von der Benutzungshäufigkeit und/oder der Häufigkeit eines Getränkebezuges aufweist.

## Claims

1. Descaling device, comprising a storage container (1) having a descaling agent (2) therein for descaling a flow-line system, the storage container (1) comprising a metering unit (3) for dispensing a precise quantity of the descaling agent (2) into the flow-line system and it being possible to insert the storage container (1) into a receptacle (4) corresponding to the storage container (1), the metering unit (3) or the storage container (1) comprising a closure (5) that opens when the storage container (1) is inserted into the receptacle (4),
**characterised in that**
the closure (5) is or comprises a membrane.

2. Descaling device, comprising a storage container (1) having a descaling agent (2) therein for descaling a flow-line system, the storage container (1) comprising a metering unit (3) for dispensing a precise quantity of the descaling agent (2) into the flow-line system and it being possible to insert the storage container (1) into a receptacle (4) corresponding to the storage container (1), the metering unit (3) or the storage container (1) comprising a closure (5) that opens when the storage container (1) is inserted into the receptacle (4),
**characterised in that**
the descaling device (10) comprises at least one pin (13, 14) which engages in a corresponding recess (11, 12) when the storage container (1) is inserted into the receptacle (4) and which, when the storage container (1) is completely inserted, is brought into contact with a plastically deformable or destructible contact element (15, 16) that fixes the storage container (1) in place in the inserted position.

3. Descaling device according to either claim 1 or claim 2, **characterised in that** the storage container (1) is disposable.

4. Descaling device according to claim 1, claim 2 or claim 3, **characterised in that** the metering unit (3) is a one-piece component of the storage container (1).

5. Descaling device according to claim 1, **characterised in that**
an opening mechanism for opening the closure (5) is arranged on the metering unit (3) or on the storage container (1).

6. Descaling device according to claim 5, **characterised in that**
the opening mechanism comprises an adjusting lever (6) or a slide that is mounted so as to be movable between a closed position when the closure (5) is unopened and an open position when the closure (5) is open.

7. Descaling device according to claim 6, **characterised in that**
the adjusting lever (6) or the slide can be moved between the closed position and the open position by means of an abutment (7) in the receptacle (4) of the storage container (1).

8. Descaling device according to claim 7, **characterised in that**
the abutment (7) is designed as a barb-like ramp.

9. Descaling device according to claim 8, **characterised in that**
the ramp is mounted so as to be movable against the force of at least one spring (8).

10. Descaling device according to any of claims 6 to 9, **characterised in that** the adjusting lever (6) or the slide has a predetermined breaking point (9), the destruction of which by the removal of the storage container (1) from the receptacle (4) is irreversible.

11. Descaling device according to claim 2, **characterised in that**
the contact element (15, 16) forms the base of the otherwise continuous recess (11, 12).

12. Descaling device according to either claim 2 or claim 11, **characterised in that**
the storage container (1) can be fixed in place by a movement of the storage container (1), which movement is generated by the action of a force, in the insertion direction and by a predetermined breaking point (17, 18) on the contact element (15, 16) being irreversibly destroyed as a result.

13. Descaling device according to any of claims 1 to 12, **characterised in that**
the descaling device (10) comprises at least one sensor (19) for detecting the inserted storage container (1).

14. Descaling device according to claim 13, **characterised in that**
the sensor (19) is a microswitch.

15. Descaling device according to any of the preceding claims, **characterised in that**
the storage container (1) is made in its entirety of plastics material or of a plastics composite material.

16. Beverage machine comprising a descaling device according to any of the preceding claims, comprising a flow-line system for fluids having at least one water container (21), or water supply, containing water (20), at least one pump (22, 23), at least one valve (24, 25, 26, 27, 28, 29, 30) and at least one discharging means (31, 32, 33), **characterised in that**
the descaling agent (2) dispensed by the metering unit (3) can be fed to the flow-line system via a mixing chamber (34).

17. Beverage machine according to claim 16, **characterised in that**
the descaling device for descaling the flow-line system is arranged between the water container (21) and the discharging means (31, 32, 33).

18. Beverage machine according to claim 16, **characterised in that**
the descaling device for descaling the flow-line system is integrated in the water line (36) of the water container (21) as a bypass (35).

19. Beverage machine according to any of claims 16 to 18, **characterised in that**
the beverage machine comprises a timer for carrying out a descaling process in rotation based on the frequency of use and/or the frequency of drink withdrawal.

## Revendications

1. Dispositif de détartrage, comprenant un réservoir (1) dans lequel est reçu un détartrant (2) servant au détartrage d'un système de conduites d'écoulement, le réservoir (1) comprenant une unité de dosage (3) servant à la distribution précise du détartrant (2) dans le système de conduites d'écoulement et le réservoir (1) pouvant être inséré dans un logement (4) correspondant au réservoir (1), l'unité de dosage (3) ou le réservoir (1) comprenant une fermeture (5) s'ouvrant au moyen de l'insertion du réservoir (1) dans le logement (4),
**caractérisé en ce que**
la fermeture (5) est ou comprend une membrane.

2. Dispositif de détartrage, comprenant un réservoir (1) dans lequel est reçu un détartrant (2) servant au détartrage d'un système de conduites d'écoulement, le réservoir (1) comprenant une unité de dosage (3) servant à la distribution précise du détartrant (2) dans le système de conduites d'écoulement et le réservoir (1) pouvant être inséré dans un logement (4) correspondant au réservoir (1), l'unité de dosage (3) ou le réservoir (1) comprenant une fermeture (5) s'ouvrant au moyen de l'insertion du réservoir (1) dans le logement (4),
**caractérisé en ce que**
le dispositif de détartrage (10) comprend au moins une goupille (13, 14) s'enclenchant dans un évidement correspondant (11, 12) lors de l'insertion du réservoir (1) dans le logement (4), laquelle goupille est amenée en appui sur un élément de contact (15, 16) déformable plastiquement ou destructible fixant le réservoir (1) dans la position insérée lorsque le réservoir (1) est inséré complètement.

3. Dispositif de détartrage selon la revendication 1 ou 2, **caractérisé en ce que** le réservoir (1) est réalisé en tant qu'article jetable.

4. Dispositif de détartrage selon la revendication 1, 2 ou 3, **caractérisé en ce que** l'unité de dosage (3) fait partie intégrante du réservoir (1).

5. Dispositif de détartrage selon la revendication 1, **caractérisé en ce qu'**un mécanisme d'ouverture servant à l'ouverture de la fermeture (5) est disposé sur l'unité de dosage (3) ou sur le réservoir (1).

6. Dispositif de détartrage selon la revendication 5, caractérisé en ce le mécanisme d'ouverture comprend un levier de réglage (6) ou un coulisseau qui est monté mobile entre une position de fermeture lorsque la fermeture (5) n'est pas ouverte et une position d'ouverture lorsque la fermeture (5) est ouverte.

7. Dispositif de détartrage selon la revendication 6, caractérisé en ce le levier de réglage (6), respectivement le coulisseau, peut être déplacé au moyen d'une butée (7) dans le logement (4) du réservoir (1) entre la position de fermeture et la position d'ouverture.

8. Dispositif de détartrage selon la revendication 7, caractérisé en ce la butée (7) est réalisée sous la forme d'une rampe réalisée en forme de crochet.

9. Dispositif de détartrage selon la revendication 8, caractérisé en ce la rampe est montée de manière déplaçable à l'encontre de la force d'au moins un ressort (8).

10. Dispositif de détartrage selon l'une des revendications 6 à 9, **caractérisé en ce que**,
le levier de réglage (6) ou le coulisseau comprend un point de rupture (9) dont la destruction par le retrait du réservoir (1) hors du logement (4) est irréversible.

11. Dispositif de détartrage selon la revendication 2, **caractérisé en ce que** l'élément de contact (15, 16) forme le fond de l'évidement (11, 12) par ailleurs réalisé de manière à pouvoir être traversé.

12. Dispositif de détartrage selon la revendication 2 ou 11, caractérisé en ce la fixation du réservoir (1) est rendue possible par un déplacement, produit par l'action d'une force, du réservoir (1) dans la direction d'insertion et une destruction irréversible ainsi provoquée d'un point de rupture (17, 18) sur l'élément de contact (15, 16).

13. Dispositif de détartrage selon une des revendications 1 à 12, **caractérisé en ce que** le dispositif de détartrage (10) comprend au moins un capteur (19) servant à détecter le réservoir (1) inséré.

14. Dispositif de détartrage selon la revendication 13, caractérisé en ce le capteur (19) est un commutateur miniature.

15. Dispositif de détartrage selon l'une des revendications précédentes, **caractérisé en ce que**
le réservoir (1) est globalement réalisé dans son ensemble en matière plastique ou en matériau composite de matière plastique.

16. Distributeur de boissons doté d'un dispositif de détartrage selon l'une des revendications précédentes, comprenant un système de conduites d'écoulement pour des fluides doté d'au moins un réservoir d'eau (21) contenant de l'eau (20) ou d'une alimentation en eau, d'au moins une pompe (22, 23), d'au moins une soupape (24, 25, 26, 27, 28, 29, 30) et d'au moins un dispositif de prélèvement (31, 32, 33), **caractérisé en ce que**
le détartrant (2) distribué par l'unité de dosage (3) peut être acheminé jusqu'au système de conduites d'écoulement par le biais d'une chambre de mélange (34).

17. Distributeur de boissons selon la revendication 16, **caractérisé en ce que**
le dispositif de détartrage servant au détartrage du système de conduites d'écoulement est disposé entre le réservoir d'eau (21) et le dispositif de prélèvement (31, 32, 33).

18. Distributeur de boissons selon la revendication 16, **caractérisé en ce que**
le dispositif de détartrage servant au détartrage du système de conduites d'écoulement est intégré en tant que dérivation (35) dans la conduite d'eau (36) du réservoir d'eau (21).

19. Distributeur de boissons selon une des revendications 16 à 18, **caractérisé en ce que** le distributeur de boissons comprend une commande temporisée servant à effectuer régulièrement un détartrage en fonction de la fréquence d'utilisation et/ou de la fréquence d'une distribution de boisson.
